Europäisches Patentamt

(19) European Patent Office (11) Publication number: **0 264 943**
**B1**
Office européen des brevets

(12) **EUROPEAN PATENT SPECIFICATION**

(45) Date of publication of the patent specification: (51) Int. Cl.⁵: **B65G 53/48**
27.12.90

(21) Application number: **87115504.0**

(22) Date of filing: **22.10.87**

(54) Improved powder feeder.

(30) Priority: **23.10.86 US 922578**

(43) Date of publication of application:
**27.04.88 Bulletin 88/17**

(45) Publication of the grant of the patent:
**27.12.90 Bulletin 90/52**

(84) Designated Contracting States:
**AT BE CH DE ES FR GB GR IT LI LU NL SE**

(56) References cited:
**DE-A- 2 923 717**
**DE-A- 2 930 236**

(73) Proprietor: **WARNER-LAMBERT COMPANY, 201 Tabor Road, Morris Plains New Jersey 07950(US)**

(72) Inventor: **Ghebre-Sellassie, Isaac, 359 Dell Place, Stanhope, N.J. 07874(US)**
Inventor: **Fawzi, Mahdi Bakir, 11 Timberline Drive, Flanders, N.J. 07836(US)**
Inventor: **Gordon, Robert Harry, 134 Lincoln Avenue, Dover, N.J. 07801(US)**
Inventor: **Nesbitt, Russel Ulmer, 292 Miller Avenue, Somerville, N.J. 08876(US)**

(74) Representative: **Mansmann, Ivo, c/o Gödecke AG - Patentabteilung Postfach 569 Mooswaldallee 1-9, D-7800 Freiburg(DE)**

## Description

The present invention is directed to an apparatus for feeding powder in a continuous manner and particularly to such an apparatus which smoothly delivers powder in a pelletization process without being blocked.

A process is known whereby drugs in powder form are coated onto small pellets or beads such as sugar seeds with the help of a sticky polymer binder. In order to effect such process it is necessary to uniformly feed the drug in powder form to the product bowl where the coating operation is performed.

There is known apparatus for feeding powder for the above-described purpose. However, it has been found that the prior art apparatus becomes backed up or clogged with the powder during operation, thereby resulting in interruption of the process line.

DE-A 2 930 235 discloses a transport device for discharging solid particles from a container under an applied pressure in which the solid particles are supplied from above through a pipe to a supply container and then to a transport pipe. In transport pipe, there are provided a horizontal rotary vane feeder and a screw conveyor which discharges the material through a nozzle-like taper to a pipe for a conveying gas that moves the material onwards. A Venturi constriction is provided in pipe at the lower end of nozzle-like taper. DE-A 2 930 235 does not show the combination of the arrangement of a powder injection nozzle and an extension tube as described in this specification.

In accordance with the present invention, an apparatus having a novel structure is provided, with the result that continuous delivery of powder is provided.

It is therefore an object of the invention to provide a powder feeder which delivers powder smoothly and does not become clogged.

It is a further object of the invention to modify an existing powder feeder so that delivery of powder is not interrupted by the formation of a powder plug.

It is still a further object of the invention to effect modifications to an existing powder feeder which are relatively simple and inexpensive.

The invention comprises a powder feeder for feeding powder in a continous manner without being blocked comprising a powder container for receiving powder to be fed, said powder container having an axis which lies in the direction of powder feed, powder injection nozzle means having an axis which is not co-linear with said container axis, an orifice for supplying gas under pressure having an axis which is co-linear with said powder injection nozzle means axis, said gas under pressure being operational to feed said powder through said injection nozzle means, said powder injection nozzle means having a wider diameter at its powder receiving end and tapering from its receiving end in the direction of material flow and the injection nozzle axis gradually and without the presence of an abrupt change of direction and/or discontinuity, wherein said powder is fed uninterruptedly through said powder injection nozzle means and through a connecting hose which is characterized in that the injection nozzle has a relatively narrower exit diameter and is continued by the connecting hose of substantially the same diameter and in that the axis of said injection nozzle means is at an obtuse angle to said container axis, so that said powder flows downwardly into and through said injection nozzle means and into an open extension tube having an unconstricted end of a relatively wider diameter.

In accordance with the invention, the above objects are accomplished by providing the above mentioned modifications to an existing powder feeder. In a first aspect of the invention, the conventional powder injection nozzle, which is shaped so as to include an abrupt change of direction or discontinuity is replaced with a powder injection nozzle which tapers smoothly without any discontinuity or an abrupt change of direction in the direction of its axis. The powder is fed uninterruptedly through the nozzle means and a connecting house into an open extension tube having an unconstricted end.

In accordance with a further aspect of the invention, the axis of the powder injection nozzle is arranged to be at an obtuse angle to the axis of the powder container so that the powder flows downwardly from the container into the injection nozzle.

In accordance with advantageous embodiments of the present invention, the pitch and shaft diameter of screw feed means used to feed the powder in the axis direction of the powder container are arranged to provide better feed control, and interchangeable screw feeds of varying pitch are provided for different powders.

The invention will be better understood by referring to the accompanying drawings, in which:

Figure 1 is a schematic representation of a known powder feeder in accordance with the prior art.

Figure 2 is a detailed schematic representation of a portion of the prior art powder feeder.

Figure 3 is a schematic representation of improvements in accordance with the present invention.

Figure 4 is a further schematic representation of improvements in accordance with the present invention.

Figure 5 is a schematic representation of a powder feeder having the improved feed screw and means provided by the invention.

Figures 6 to 9 are exemplary feed screws which are provided by the invention.

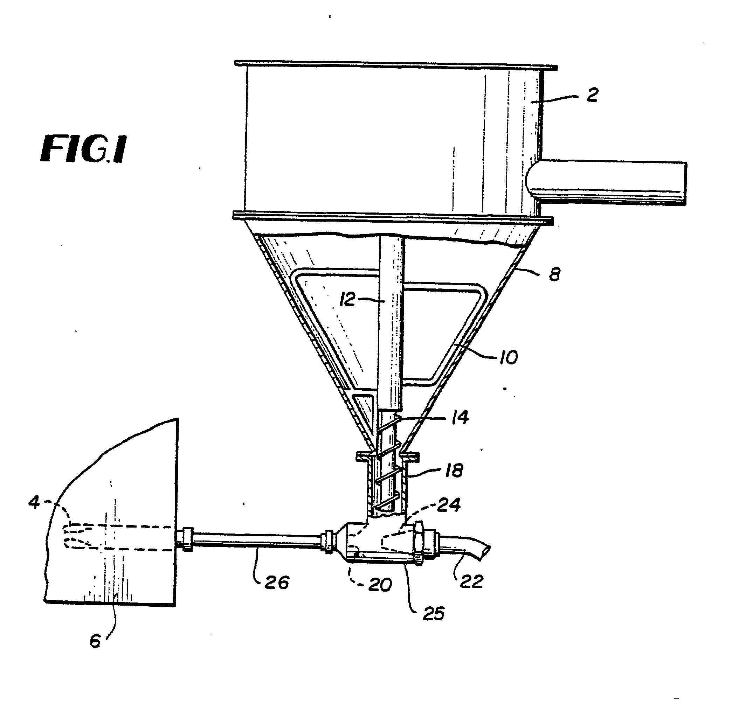

Referring to Figure 1, a powder feeder in accordance with the prior art is depicted, and for example, this may correspond to the structure of the Glatt GPCG-5 Powder Coater Granulator with a rotor insert and equipped with the necessary accessories to manufacture pellets.

In the operation of the apparatus shown in Figure 1, powder is fed to powder container 2, and after being transported through the apparatus is fed continuously from blow-out jet 4 into product bowl 6.

In the product bowl, the powder may be coated on-

to small spherical beads or pellets, which for example may be sugar seeds which have been coated with a sticky polymer binder.

Referring more specifically to the operation of the powder feeder, after being fed to product container 2, the powder falls by gravity to portion 8 of the container, which is in the shape of a right circular cone. There, the powder is mixed by stripper 10, which is attached to shaft 12 for rotation.

Feed screw 14 then moves the powder through relatively more narrow container portion 18, whereafter the powder is fed to powder injection nozzle 20. Compressed air, entering through air hose 22 and nozzle orifice 24, facilitates feeding of the powder to and through injection nozzle 20. Behind the injection nozzle, the powder is fed through connecting hose 26 and out of blow-out jet 4 into the product bowl 6.

As mentioned above, a problem which has been encountered with the use of the prior art powder feeder is that it becomes backed up with powder, with the result that operation is interrupted.

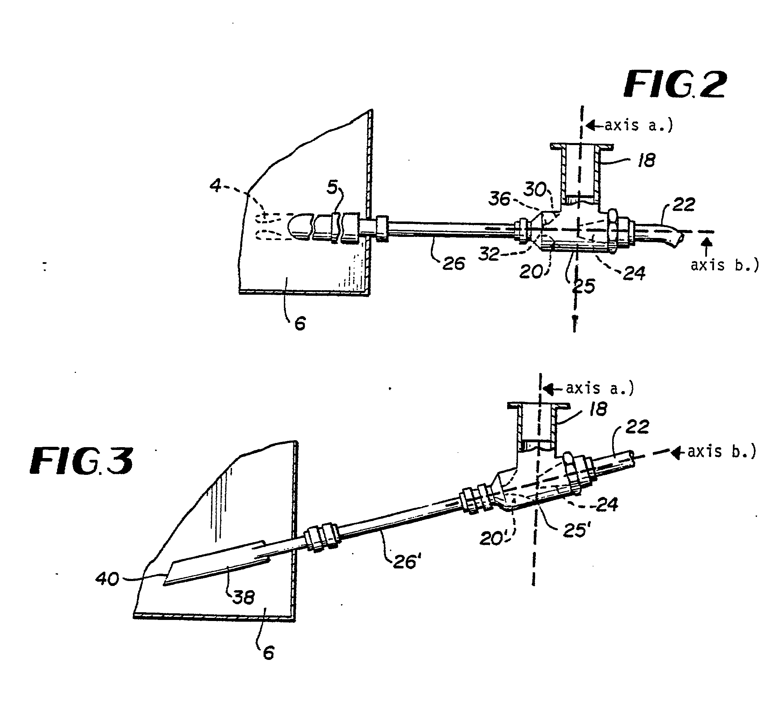

Referring to Figure 2, it is noted that injection nozzle 20 is comprised of a conical mouth portion 30 which leads to and is terminated by a cylindrical portion 32 of relatively narrower diameter. At area 36, there is a change of direction and resultant discontinuity in the nozzle, and at this area there is a tendency for a powder plug to form. In addition to this, jet 4 is constricted at its end, and also may become backed up, especially if humidity conditions are not carefully controlled.

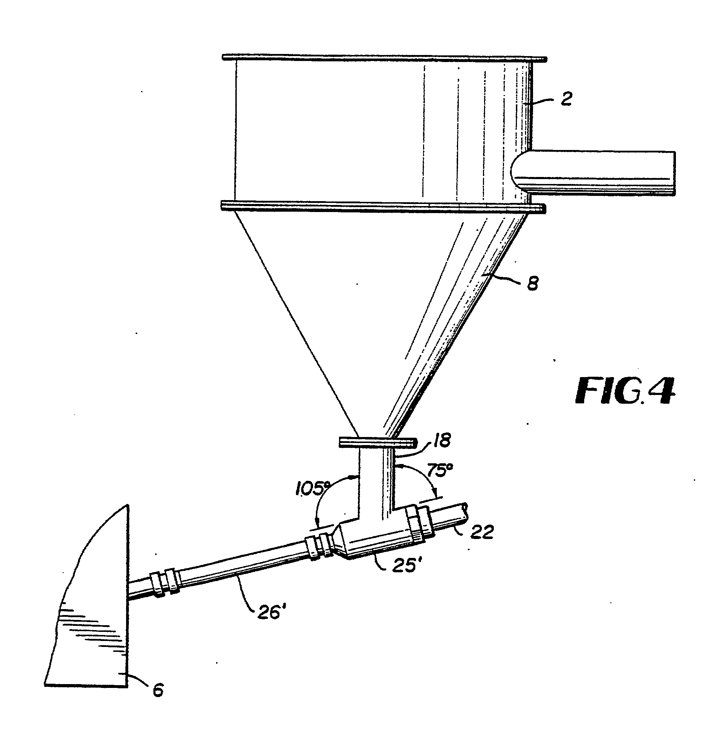

Referring to Figure 3, expedients in accordance with the present invention for solving the above-described problems are depicted.

In the arrangement of Figure 3, powder injection nozzle 20 as shown in Figure 2, is replaced with powder injection nozzle 20'. Nozzle 20' is constructed so as to have a relatively narrower exit diameter. Furthermore the axis of said injection nozzle means 20' is at an obtuse angle to said container axis a), so that said powder flows downwardly into and through said injection nozzle means 20' and into an open extension tube 38 having an unconstricted end 40 of a relatively wider diameter.

This facilitates smooth flow of powder through nozzle 20' without the occurrence of a plug or blockage.

Housing 25 of Figure 2 in which the powder injection nozzle and air jet are located is replaced by housing 25' shown in Figure 3, which is located at an obtuse angle (axis a/axis b) with respect to cylindrical container 18. This disposes the entrance to nozzle 20' in the path of powder flow, and since nozzle 20' is directed downwardly, allows the force of gravity to augment the powder flow. In a preferred embodiment, the side of element 25' which houses the powder injection nozzle is at an angle of 105° to cylindrical element 18, and such an embodiment is illustrated in Figure 4.

Referring again to the illustration of the prior art in Figure 2, it is noted that blow out jet 4 has a constriction at its end, which as mentioned, tends to become blocked.

Referring to Figure 3, it is noted that blow out jet 4 is replaced with extension tube 38, which has an open end 40, which does not become blocked.

Thus, in accordance with the invention, as depicted in the embodiments of Figures 3 and 4, a structure is provided which eliminates the formation of a blockage at powder injection nozzle 20' and thus provides for the uninterrupted flow of powder. Additionally, the problem wherein powder blockages formed at blow out jet 4 has been obviated.

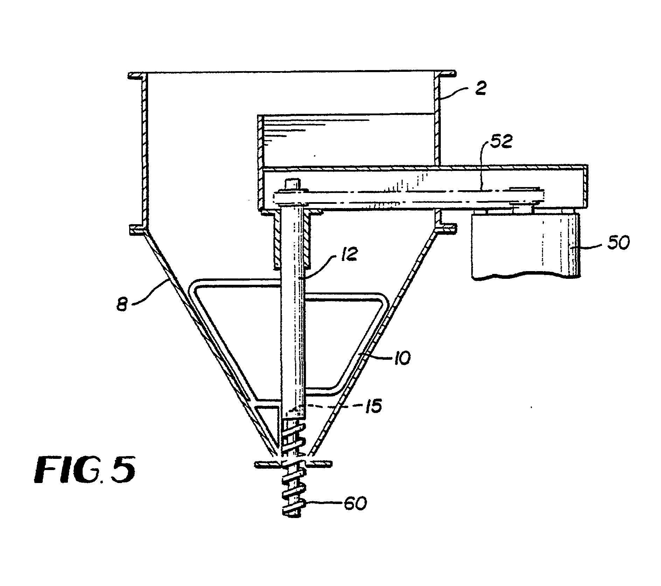

Further improvements which are provided by the present invention are illustrated in Figures 5 to 9.

Referring to Figure 1, it is noted that in the prior art apparatus a feed screw 14 is provided for moving the powder through cylindrical container 18. In accordance with the invention, the original feed screw is cut off and replaced with feed screws which are customized to the particular powder being worked with. This provides better control over the powder being fed, and minimizes the effects of air from jet 24 which may circulate in container 18 and can interfere with the desired powder feed path. Since the powder feed can be influenced by the screw pitches, changes in pitch provides in addition to the helical screw speed and the compressed air pressure, a third dimension to controlling the feed rate.

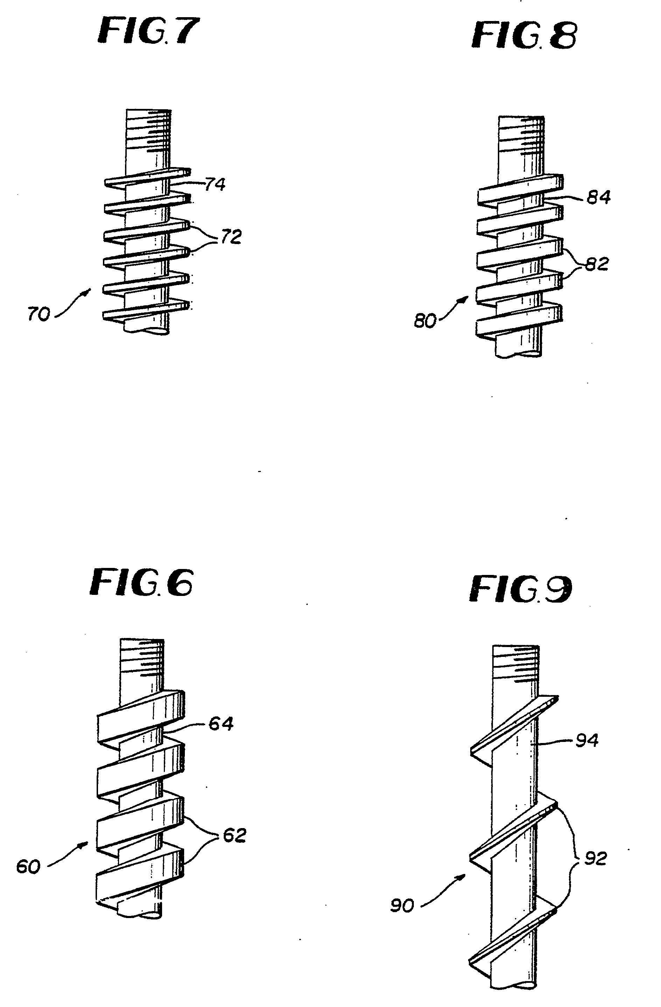

Typical feed screws which may be employed are illustrated in Figures 6 to 9.

Thus, Figure 6 shows a feed screw having a pitch of 2,54/2 cm while Figure 7 shows a feed screw having a pitch of 2,54/4 cm. Similarly, Figure 8 shows a feed screw having a pitch of 2,54/3 cm, while Figure 9 shows a feed screw having a pitch of 2,54 cm. Additionally, the thickness of the shaft (e.g., identified by reference numeral 64 in Figure 6) may be varied to further control powder feed.

As shown in Figure 5, the modified feed screws are tapped into shaft 12, as indicated at reference numeral 15.

It is to be understood that the apparatus of the invention may be used to feed many different powders. By way of non-limiting example, some drugs in powder form which may be pelletized by use of the powder feeder disclosed herein are pseudoephedrine hydrochloride and diphenhydramine hydrochloride.

## Claims

1. A powder feeder for feeding powder in a continuous manner without being blocked comprising

a powder container (2) for receiving powder to be fed, said powder container (2) having an axis (a) which lies in the direction of powder feed, powder injection nozzle means (20') having an axis (b) which is not co-linear with said container axis,

an orifice (24) for supplying gas under pressure having an axis (b) which is co-linear with said powder injection nozzle means axis (b), said gas under pressure being operational to feed said powder through said injection nozzle means (20'), said powder injection nozzle means (20') having a wider diameter at its powder receiving end (30) and tapering from its receiving end in the direction of material flow and the injection nozzle axis (b) gradually and without the presence of an abrupt change of direction and/or discontinuity, wherein said powder is fed uninterruptedly through said powder injection nozzle means (20') and through a connecting hose (26') characterized in that the injection nozzle (20') has a relatively narrower exit diameter and is continued by the connecting hose (26') of substantially the same diameter and in that the axis of said injection nozzle means (20') is at an obtuse angle to said container axis (a), so that said powder flows downwardly into and through said injection nozzle means (20') and into an open extension tube (38) having an unconstricted end (40) of a relatively wider diameter.

2. The powder feeder of claim 1, wherein said obtuse angle is 105°.

3. The powder feeder of claims 1 and 2, further including feed screw means (14) disposed in said container (2) for feeding said powder along said container axis, said feed screw (14) having a pitch and a screw diameter such as to maintain control over the powder flow.

4. The powder feeder of claim 3, wherein said feed screw means (14) are replaceable.

**Revendications**

1. Un dispositif d'alimentation en poudre, pour amener une poudre d'une manière continue et sans colmatage, comprenant:
un récipient à poudre (2), destiné à recevoir la poudre à alimenter, ledit récipient à poudre (2) ayant un axe (a) qui se place selon la direction de l'alimentation en la poudre,
une buse d'injection de poudre (20'), ayant un axe (b) qui n'est pas colinéaire avec l'axe dudit récipient,
un orifice (24), d'injection de gaz sous pression, ayant un axe (b) colinéaire audit axe (b) de la buse d'injection de poudre, ledit gaz sous pression pouvant faire circuler ladite poudre à travers ladite buse d'injection (20'), laquelle présente un diamètre plus large à son extrémité (30) recevant la poudre et qui se rétrécit progressivement depuis son extrémité recevant la poudre, dans la direction de l'écoulement du produit et de l'axe (b) de la buse d'injection, et ce, sans modification brutale de direction et/ou sans discontinuité, ladite poudre étant amenée d'une manière ininterrompue, par l'intermédiaire de ladite buse d'injection de poudre (20') et par l'intermédiaire d'un tuyau flexible de raccordement (26'), caractérisé en ce que la buse d'injection (20') a un diamètre de sortie relativement plus étroit et se poursuit par le flexible de raccordement (26'), qui a un diamètre pratiquement identique, et en ce que l'axe de ladite buse d'injection (20') forme un angle obtus avec ledit axe (a) du récipient, de telle sorte que ladite poudre s'écoule vers le bas, dans ladite buse d'injection (20') en traversant cette dernière, puis dans un tube rallonge ouvert (38) ayant une extrémité non-étranglée (40) et de relativement plus grand diamètre.

2. Le dispositif d'alimentation en poudre selon la revendication 1, dans lequel ledit angle obtus est de 105°.

3. Le dispositif d'alimentation en poudre selon les revendications 1 et 2, comprenant en outre un moyen de vis d'alimentation (14) disposé dans ledit récipient (2) pour faire avancer ladite poudre le long dudit axe de récipient, ladite vis d'alimentation (14) ayant un pas et un diamètre de vis permettant d'assurer une régulation de l'écoulement de la poudre.

4. Dispositif d'alimentation en poudre selon la revendication 3, dans lequel lesdits moyens de vis d'alimentation (14) sont remplaçables.

**Patentansprüche**

1. Vorrichtung zur ununterbrochenen kontinuierlichen Zuführung pulverförmigen Materials mit
– einem Pulverbehälter (2) zur Aufnahme des zuzuführenden pulverförmigen Materials, wobei der Pulverbehälter (2) eine Achse (a) aufweist, die in Richtung der Pulverzufuhr liegt,
– einer Einblasdüse (20') für das pulverförmige Material mit einer Achse (b), die nicht in gleicher Richtung wie die Behälterachse (a) verläuft,
– einer Düse (24) zur Zuführung von unter Druck stehendem Gas mit einer Achse (b), die in gleicher Richtung verläuft wie die Achse (b) der Einblasdüse, wobei das unter Druck stehende Gas dazu dient, das pulverförmige Material durch die Einblasdüse (20') zu fördern, wobei die Einblasdüse (20') in ihrem zur Aufnahme des pulverförmigen Materials bestimmten Endbereich (30) einen grösseren Durchmesser aufweist und sich von diesem Endbereich in Richtung des Materialflusses und der Achse (b) der Einblasdüse allmählich und ohne abrupten Richtungswechsel und/oder Diskontinuität verjüngt, derart, dass das pulverförmige Material ohne Unterbrechung durch die Einblasdüse (20') und durch eine Schlauchverbindung (26') zugeführt wird,
dadurch gekennzeichnet, dass die Einblasdüse (20') in ihrem Austrittsbereich einen im Verhältnis kleineren Durchmesser aufweist und durch die Schlauchverbindung (26'), deren Durchmesser im wesentlichen gleich gross ist, fortgesetzt ist und dass die Achse der Einblasdüse (20') mit der Behälterachse (a) einen stumpfen Winkel bildet, derart, dass das pulverförmige Material abwärts in und durch die Einblasdüse (20') und in ein offenes Aufsteckrohr (38) fliesst, welches einen nicht verengten Endbereich (40) mit einem im Verhältnis grösseren Durchmesser aufweist.

2. Vorrichtung nach Anspruch 1, d.g., dass der stumpfe Winkel ein Winkel von 105° ist.

3. Vorrichtung nach den Ansprüchen 1 und 2, d.g., dass sie eine im Behälter (2) untergebrachte Eintragsschnecke (14) zur Zuführung des pulverförmigen Materials in Richtung der Behälterachse aufweist, wobei die Eintragsschnecke (14) eine Gewindehöhe und einen Schneckendurchmesser aufweist, die so gewählt sind, dass der Fluss des pulverförmigen Materials gesteuert werden kann.

4. Vorrichtung nach Anspruch 3, d.g., dass die Eintragsschnecke (14) austauschbar ist.

FIG.1

*FIG.2*

←axis a.)

4 --- 5  36 -- 30  18  22

26  32 -- 20  24

25  axis b.)

6

*FIG.3*

←axis a.)

18  22

←axis b.)

24

20  25'

40  26'

38

6

FIG.4

FIG. 5

# FIG.7

# FIG.8

# FIG.6

# FIG.9